(19) **Europäisches Patentamt / European Patent Office / Office européen des brevets**

(11) **EP 3 716 681 B1**

(12) **EUROPEAN PATENT SPECIFICATION**

(45) Date of publication and mention
of the grant of the patent:
**05.05.2021 Bulletin 2021/18**

(21) Application number: **19305407.9**

(22) Date of filing: **28.03.2019**

(51) Int Cl.:
*H04W 36/34* *(2009.01)*    *H04W 36/00* *(2009.01)*
*H04W 28/02* *(2009.01)*    *H04W 40/20* *(2009.01)*
*H04W 92/20* *(2009.01)*    *H04W 84/04* *(2009.01)*
*H04W 36/08* *(2009.01)*    *H04B 7/26* *(2006.01)*
*H04W 40/22* *(2009.01)*

(54) **ADMISSION CONTROL DELEGATION FOR MOVING IAB**

DELEGIERUNG DER ZUGANGSKONTROLLE FÜR BEWEGLICHE IAB

DÉLÉGATION DE COMMANDE D'ADMISSION POUR LE DÉPLACEMENT D'UN IAB

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.09.2020 Bulletin 2020/40**

(73) Proprietors:
• **Mitsubishi Electric R&D Centre Europe B.V.**
**1119 NS Schiphol Rijk Amsterdam (NL)**
Designated Contracting States:
**FR**
• **Mitsubishi Electric Corporation**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **KHANFOUCI, Mourad**
**35708 RENNES Cedex 7 (FR)**

• **BONNEVILLE, Hervé**
**35708 RENNES cedex 7 (FR)**
• **BRUNEL, Loïc**
**35708 RENNES Cedex 7 (FR)**

(74) Representative: **Plasseraud IP**
**66, rue de la Chaussée d'Antin**
**75440 Paris Cedex 09 (FR)**

(56) References cited:
**WO-A1-2018/175817**

• **"3rd Generation Partnership Project; Technical Specification Group Radio Access Network; NR; Study on Integrated Access and Backhaul; (Release 16)", 3GPP STANDARD; TECHNICAL REPORT; 3GPP TR 38.874, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V16.0.0, 10 January 2019 (2019-01-10), pages 1-111, XP051591643, [retrieved on 2019-01-10]**

## Description

### Technical Field

This disclosure pertains to the field of radio access networks, especially the Integrated Access and Backhaul (IAB) nodes in the context of the Third Generation Partnership Project (3GPP).

Background Art

WO 2018/175817 deals with such a subject.
In known networks, the IAB nodes are defined as radio access nodes that support wireless access to user equipment (UE; or user terminals) and that are wirelessly backhauling the UE traffic to a distant donor IAB node, or IAB-d. 3GPP studied various architecture and resource management options for fixed IAB nodes.
Fixed IAB do not move in the coverage region of the deployment. In such a fixed architecture a donor IAB node, a central unit user plane (CU-UP) and a central unit control plane (CU-CP) are connected to distributed units (DU) through wireline IP connections. The donor IAB node is connected wirelessly to other IAB nodes through wireless backhaul links and to the user terminals through wireless access links.

### Technical Problem

The known architecture has several advantages that will be described hereinafter and that should be preserved. But, in some situations, a too late admission control is generated resulting in a backhaul radio link failure (RLF) and drop call of the UE, especially when the UE and/or the IAB nodes have a high mobility.

### Summary

The invention is set out in the independent claims, dependent claims concern preferred embodiments.
It is proposed a method of dynamic attribution of an admission control to an Integrated Access and Backhaul node disposed in a tree communication architecture between a fixed donor Integrated Access and Backhaul node (IAB-d) and a mobile terminal. The method comprises:

    a. selecting at least one anchor Integrated Access and Backhaul node among Integrated Access and Backhaul nodes of a group in function of the relative position of each node into said architecture, at least one of said nodes of said group and of said terminals being mobile with respect to the others;
    b. signaling delegation of an admission control from a Central Unit of said donor Integrated Access and Backhaul node to the selected at least one anchor Integrated Access and Backhaul node. The signaling step includes the following sub-steps:

        i. transmitting context information from said Central Unit of said donor Integrated Access and Backhaul node to the selected at least one anchor Integrated Access and Backhaul node;
        ii. transmitting identification of said donor Integrated Access and Backhaul node from said Central Unit of the said donor Integrated Access and Backhaul node to the selected at least one anchor Integrated Access and Backhaul node;
        iii. transmitting identification of said anchor Integrated Access and Backhaul node from said anchor Integrated Access and Backhaul node to at least one outbound Integrated Access and Backhaul node, said outbound Integrated Access and Backhaul node having said anchor Integrated Access and Backhaul node as a parent node.

In another aspect, it is proposed a computer software comprising instructions to implement at least a part of a method as defined here when the software is executed by a processor. In another aspect, it is proposed a computer-readable non-transient recording medium on which a software is registered to implement the method as defined here when the software is executed by a processor.
The following features, can be optionally implemented, separately or in combination one with the others:
The method further comprises, before the selection step a, a triggering step during which a set of at least one predetermined criteria is checked, the following of the method being implemented only if the said set of criteria is verified. The set of criteria includes at least one of:

-    an exceeding of a predetermined threshold of a density of the architecture;

- an exceeding of a predetermined threshold of the traffic of user mobile terminals in the architecture;
- a drop below a predetermined threshold level of quality in the architecture.

The method further comprises, after the signaling step b, the following step: c. reallocating said delegation of the admission control from the Central Unit of the said donor Integrated Access and Backhaul node to at least one target anchor Integrated Access and Backhaul node, in response to a relative movement between a source anchor Integrated Access and Backhaul node and said mobile terminal, the reallocating step including the following sub-steps:

iv. signaling context information from said source anchor Integrated Access and Backhaul node to other anchor Integrated Access and Backhaul nodes of the group;
v. signaling any handover between said source anchor Integrated Access and Backhaul node and any outbound Integrated Access and Backhaul node.

In the selection step a, the anchor Integrated Access and Backhaul node is determined in function of at least one of the following parameter, or in function of a combination of them:

- a proximity with a displacement path of a moving element of the architecture;
- a number of hypothetical communication-paths to which each node can belong;
- a number of neighboring Integrated Access and Backhaul nodes of each node in the Integrated Access and Backhaul network.

The context information of the sub-step ii includes at least one of:

- identifications of available resources at the Integrated Access and Backhaul nodes that are children of the selected anchor Integrated Access and Backhaul nodes in the architecture,
- the current used Packet Data Convergence Protocol,
- at least one Quality of Service parameter.

At least one of the following elements is relocated to the anchor Integrated Access and Backhaul node:

- the current used Packet Data Convergence Protocol context information,
- the Radio Resource Control context of the backhaul, and
- the entire Central Unit functions of the donor Integrated Access and Backhaul node.

The sub-steps ii and iii are made by means of a signaling operation according to the F1 Application Protocol defined in 3GPP TS 38.473, "F1 application protocol", rel 15, July 2018.
The solutions in this document and the various embodiments enable to propose a more efficient architecture reducing the risk of RLF, especially when at least one of the UE and/or the IAB nodes has a high mobility.

**Brief Description of Drawings**

Other features, details and advantages will be shown in the following detailed description and on the figures, on which:

**Fig. 1**

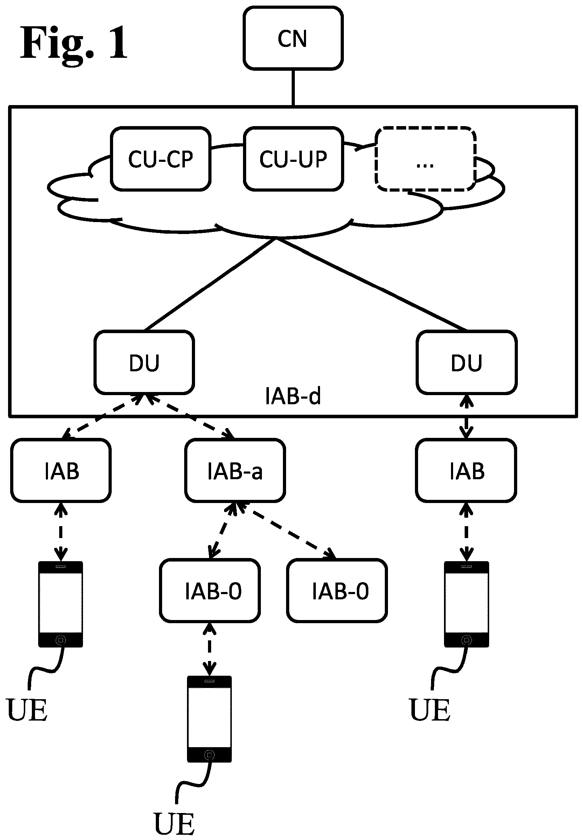

[Fig. 1] is a diagram of an IAB architecture.
**Fig. 2**

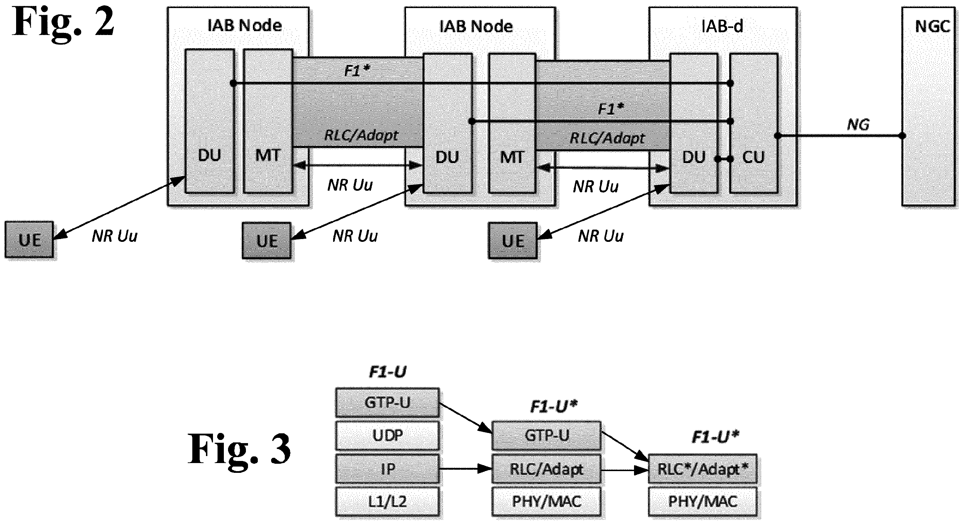

[Fig. 2] is an example of some data exchanges between IAB nodes according to the architecture of [Fig. 1].
**Fig. 3**
[Fig. 3] shows fronthaul interfaces that are running over a RLC channel.
**Fig. 4**

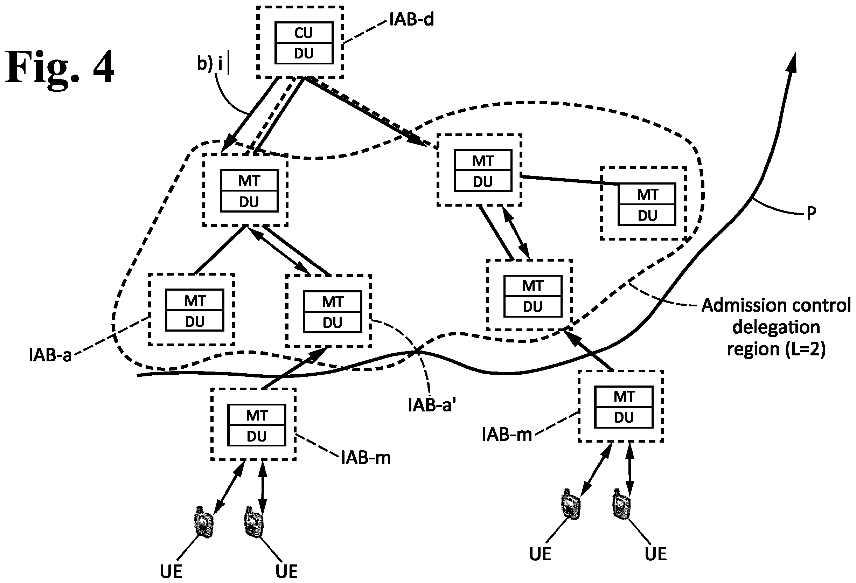

[Fig. 4] is an example of an architecture wherein a IAB node is moving.
**Fig. 5**

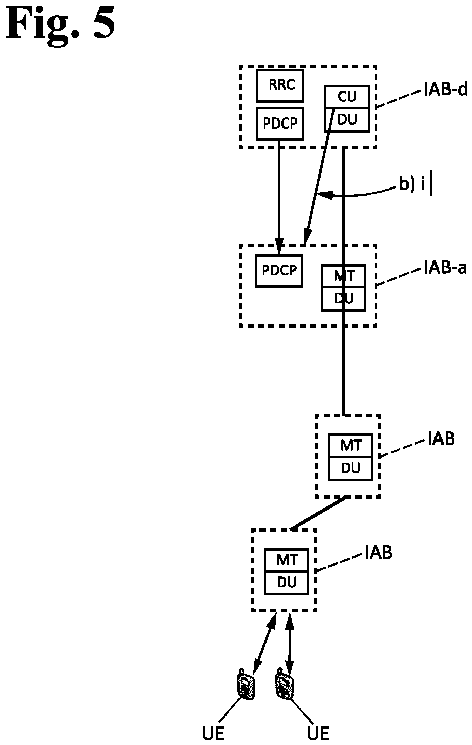

[Fig. 5] shows an embodiment an admission control delegation between IAB nodes.
**Fig. 6**

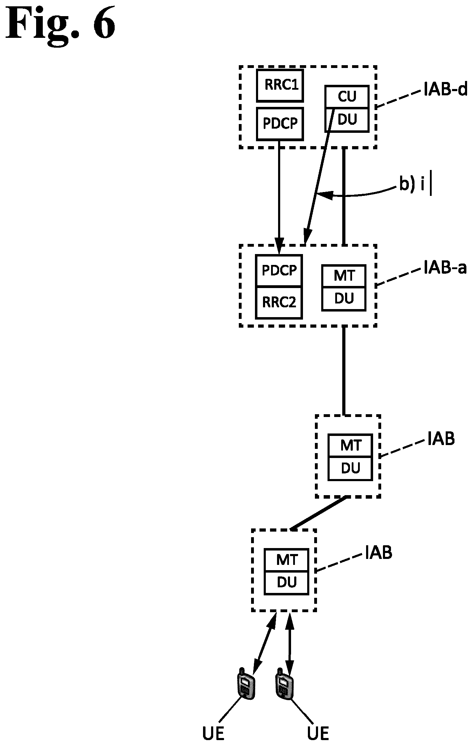

[Fig. 6] shows an embodiment an admission control delegation between IAB nodes.
**Fig. 7**

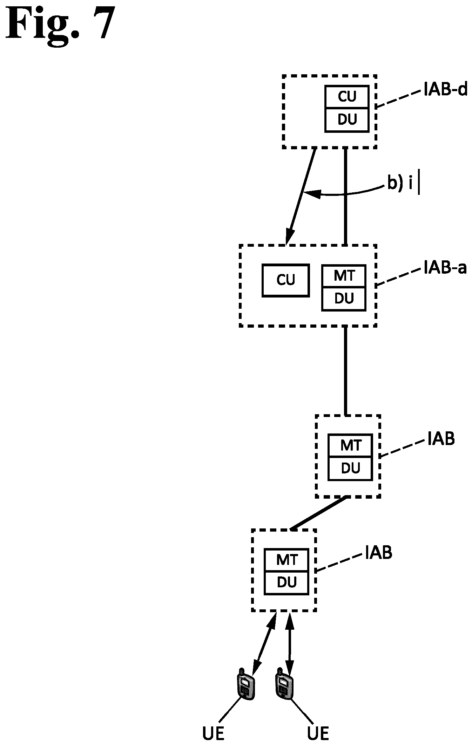

[Fig. 7] shows an embodiment an admission control delegation between IAB nodes.

**Fig. 8**

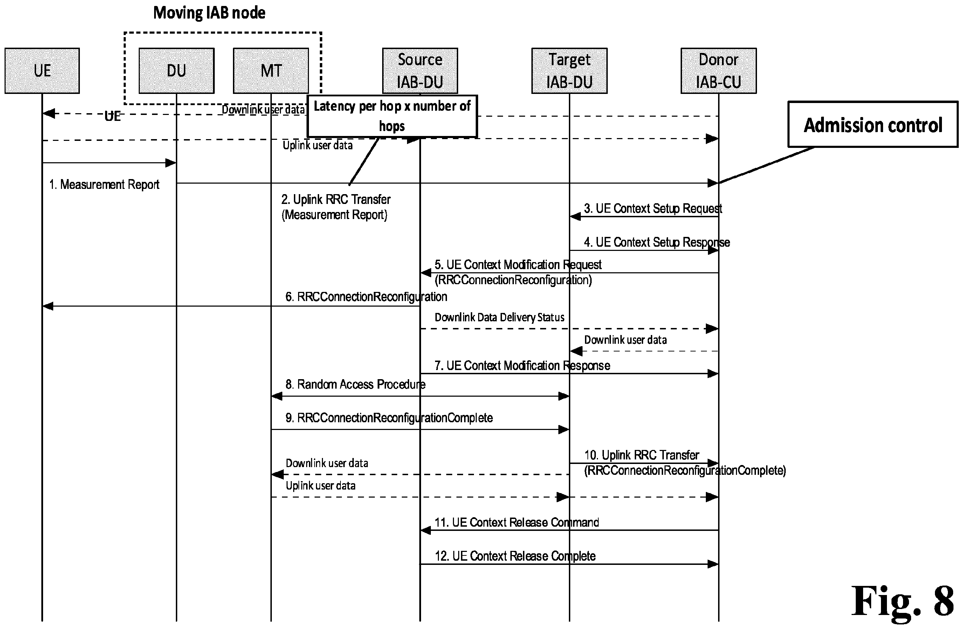

[Fig. 8] shows an embodiment of an handover procedure.

**Fig. 9**

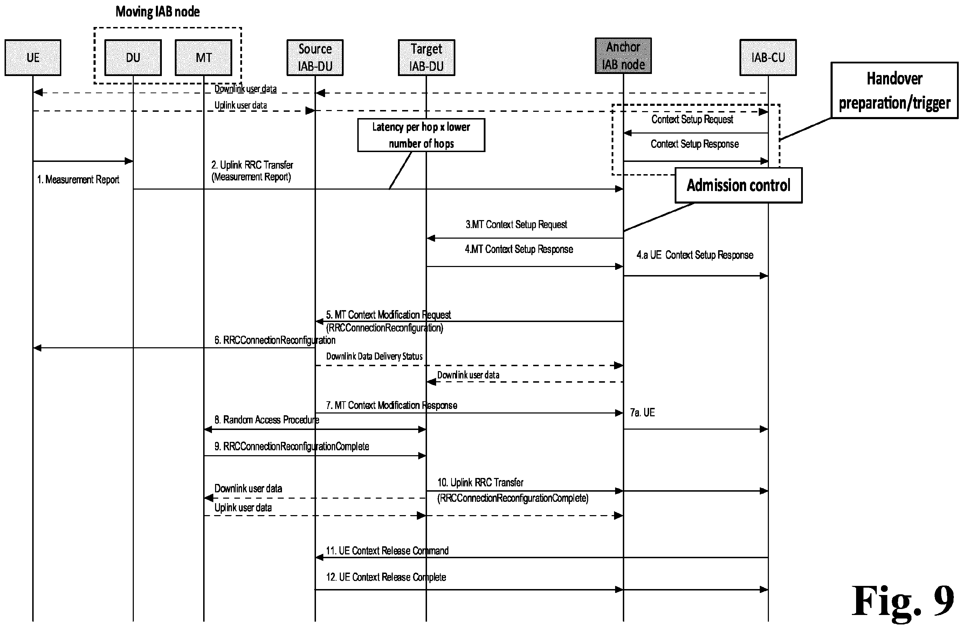

[Fig. 9] shows an embodiment of an handover procedure.

**Description of Embodiments**

Figures and the following detailed description contain, essentially, some exact elements. They can be used to enhance understanding the disclosure and, also, to define it if necessary.

It is now referred to figures 1, 2 and 3. The IAB architecture considered in [Fig. 1] is based on the architecture shown in [Fig. 2]. More details are available on such an architecture into 3GPP TR 38.874, "Study on Integrated access and backhaul", rel15, December 2018.

In such architecture, each IAB node comprises a mobile terminal (MT) function and a distributed unit (DU). A wireless backhaul link connecting two IAB nodes connects the MT function of the child IAB node with the DU of the parent IAB node. The wireless backhaul link is carrying a modified form of the fronthaul interface F1-U* shown on [Fig. 3] that is running over RLC channels (RLC for "Radio Link Control"). These RLC channels are connecting between the MT function of a serving IAB node and the DU on the donor node IAB-d. An adaptation layer is added to F1-U* that holds routing information from the source enabling hop-by-hop forwarding and may carry an end-to-end association between CU and the serving DU.

In 3GPP TS-38.470, 38.471 and 38.472, the CU-DU architecture includes an interface between CU and DU which is a GTP-U protocol that encapsulates IP packets (as shown on the left part of [Fig. 3]). The interfaces that links an IAB node to a donor IAB node IAB-d can be modified (noted F1*). Two options are possible for this:

- the GTP tunnel encapsulates RLC packets that are put on atop of routing function (adaptation) that route between the IAB nodes. This corresponds to the first F1-U* of [Fig. 3];
- A single modified RLC includes the GTP-U in both the RLC tunnel and adaptation layer. This corresponds to the second F1-U* of [Fig. 3], on the right part. The difference between the two options is either to include GTP-U header in F1-U* or not.

The MT function of each IAB-node further sustains NAS connectivity ("*Non-Access stratum*") to the NGC ("*Next Generation Core*" network), for example for authentication of the IAB-node. In other words, the signaling is made from the core network to the UE passing through the access network. It may further sustain a PDU-session ("*Protocol Data Unit*") via the NGC, for example to provide the IAB-node with connectivity to the OAM center of the network ("*OAM*" for "Operation And Maintenance").

Such an architecture provides the following advantages:

- The architecture is reducing the UE handover signalling over the core network (CN) for the UE handover between IAB nodes of the same donor IAB node (IAB-d);
- The architecture is reducing the impact of the IAB network signalling, formed by the IAB nodes and the donor IAB node, on the specifications of the core network. This is because the architecture is based on RLC tunnels (layer 2, see [Fig. 3]);
- The architecture is reducing the complexity of the PDCP ("*Packet Data Convergence Protocol*") processing during each UE handover since the PDCP entity is located in the donor IAB node;
- The architecture is reducing the number of termination points in the IAB node (one F1 termination) instead of multiple interfaces (N2, N3 and Xn interfaces) when the third layer L3 transport is considered.

For the different reasons described below, the previous architecture is a good architecture. The previous listed advantages should be preserved as most as possible when the said architecture is modified.

In the following, an architecture is proposed which is modified with respect to the architecture shown on [Fig. 1] and [Fig. 2]. The modified architecture is made in order to preserve the above advantages and to have supplementary advantages, especially in a context where the IAB nodes and/or the UE are moving nodes in the network. In fact, IAB networks should include fixed IAB nodes, moving IAB nodes and user terminals with various mobility profiles and packet traffic. One of the enhanced aspects of the modified architecture is the handover management, especially in situations where the nodes and/or UE are moving with respect to the other during time.

Moreover, the density of the IAB network is expected to be ultra-dense, for example more than 2 hops from the IAB node towards the donor IAB node. This is usually seen as a constraint in terms of complexity. In the present document, the dense IAB networks are seen as an issue for the admission control of UEs with high mobility and/or for moving IAB nodes.

If the above architecture is maintained without modification and used with moving IAB nodes and/or UE, the admission control has to be done in the central unit (CU) of the donor IAB node. This generates too late admission control that, in turn, results in a backhaul Radio Link Failure (RLF) and to drop call of the UE with high mobility with respect to IAB nodes or to drop call of the UEs connected to the moving IAB node. Such a too late admission control may also happen if congestion/retransmission is present in the path from the source IAB node to the CU of the donor IAB node.

To have situation wherein the user terminals are moving with respect to the earth is not novel. For example, mobile phone used in a vehicle corresponds to such a situation. On the contrary, to have a situation wherein some IAB nodes are moving with respect to the earth is very recent. For example, some moving vehicle can support network equipment in a manner that the vehicle forms, by itself, an IAB node. As a result, whatever the movement with respect to the earth, the relative movement between the nodes and the user terminals can be faster than in the past. If no solution is proposed, the RLF risks can increase in the future.

In the following, the architecture is a tree communication architecture. The IAB nodes and the user equipment UE have mutual parent-child interactions. The user equipment UE is a "child" with respect to a "parent" IAB node, the said "parent" IAB node is itself a "child" with respect to another IAB node, etc. The donor IAB node IAB-d is a "parent" of at least one child IAB node. In the following, especially with respect to [Fig. 4], it is considered that an IAB node is moving. It is called "moving IAB node" and referenced "IAB-m". During its displacement, the said moving IAB node IAB-m is the parent of at least one user equipment UE. During its displacement, the said moving IAB node IAB-m is successively the child of distinct parent IAB nodes, one by one. In various embodiments, the moving element can be a user equipment UE. As a consequence, the reader understands that the following detailed description made with the example of a moving IAB node can be easily transposed to a moving user equipment UE. In other words, the examples are not limited to moving IAB nodes: the moving elements can be an IAB node and/or an user equipment UE.

In the proposed architecture, the admission control tasks, usually ensured by the CU of the donor IAB node, is at least partially delegated to specific IAB nodes (called "anchor" node in the following) that are closer to the user terminal on the expected communication-path (meaning the set of relay IAB nodes interconnected between the UE and the donor IAB node). The techniques and signalling proposed here are performed prior to the actual handover of the user terminals. The delay for admission control is reduced with respect to the known architecture. As a consequence, the number of events of too late admission is reduced. The quality of service of the network is enhanced.

The general steps of a method of dynamic attribution of Integrated Access and Backhaul nodes (IAB-a) as wireless relay disposed in a tree communication architecture between a fixed donor Integrated Access and Backhaul node (IAB-d) and a mobile terminal (UE) proposed here are:

a. selecting at least one anchor Integrated Access and Backhaul node (IAB-a) among Integrated Access and Backhaul nodes (IAB) of a group in function of the relative position of each node into said architecture, at least one of said nodes of said group and of said terminals being mobile with respect to the others;

b. signaling delegation of an admission control from a Central Unit (CU) of said donor Integrated Access and Backhaul node (IAB-d) to the selected at least one anchor Integrated Access and Backhaul node (IAB-a), the signaling step including the following sub-steps:

i. transmitting context information from said Central Unit (CU) of said donor Integrated Access and Backhaul node (IAB-d) to the selected at least one anchor Integrated Access and Backhaul node (IAB-a);

ii. transmitting identification of said donor Integrated Access and Backhaul node (IAB-d) from said Central Unit (CU) of the said donor Integrated Access and Backhaul node (IAB-d) to the selected at least one anchor Integrated Access and Backhaul node (IAB-a);

iii. transmitting identification of said anchor Integrated Access and Backhaul node (IAB-a) from said anchor Integrated Access and Backhaul node (IAB-a) to at least one outbound Integrated Access and Backhaul node (IAB-o), said outbound Integrated Access and Backhaul node (IAB-o) having said anchor Integrated Access and Backhaul node (IAB-a) as a parent node.

Optionally, a further step can be implemented:

c. reallocating said delegation of the admission control from the Central Unit (CU) of the said donor Integrated Access and Backhaul node (IAB-d) to at least one target anchor Integrated Access and Backhaul node (IAB-a'), in response to a relative movement between a source anchor Integrated Access and Backhaul node (IAB-a) and said mobile terminal (UE), the reallocating step including the following sub-steps:

iv. signaling context information from said source anchor Integrated Access and Backhaul node (IAB-a) to other Integrated Access and Backhaul nodes (IAB) of the group;

v. signaling any handover between said source anchor Integrated Access and Backhaul node (IAB-a) and any outbound Integrated Access and Backhaul node (IAB-o).

In the following, some explanations, details and various features will be given for the above steps. Before, an optional triggering for admission control delegation operation can be enforced. This admission control delegation may be triggered in function of the at least one of the following criteria or in function of a combination of the following criteria:

- The density of the IAB network. For example, a threshold can be predetermined as a maximum number of hops in a given network. Then, the admission control delegation method is triggered if the communication link (or communication-path) between a donor IAB node and user equipment comprises a number of hops exceeding the predetermined threshold.
- An increase in the traffic of user terminals with high mobility or moving IAB nodes. For example, during a temporary event welcoming crowds, temporal movable IAB node can be added to an existing network. The admission control delegation may be triggered. In an example, the increasing traffic information may be provided via the network or by neighboring donor IAB nodes. For example, this can be made by the means of NG interface signaling or by the mean of Xn interface signaling between the CU of the donor IAB node and neighboring donor IAB nodes. For more details about such interfaces, the reader can consult 3GPP TS 38.300, especially figure 4.1-1 page 10. This traffic information may be obtained by ranking of the IAB nodes with respect to a traffic model in the network. Nodes with high ranking are nodes that are expected to receive the handover of an important number of user terminals with high probability. This expected number of user terminals per base station is based on a traffic model, i.e. average number of users per deployment surface. The admission control delegation can be triggered only for IAB nodes with high ranking with respect to the traffic model. The traffic model may be simulated in the CU of the donor IAB node and can be compared to and/or corrected based on an actual traffic measured in the said network.
- The current quality of the backhaul in the IAB network. For example, a threshold of a quality/performance metric of the IAB network can be predetermined. If the quality/performance metric decreases below the said threshold, the delegation of admission control is triggered. For example, the metric can be expressed as the throughput of the packets received at the CU of the donor IAB node and/or the latency of the packets received in the CU.

Each one of the criteria used to trigger the delegation of admission control can be implemented in the same manner on the entire network. In various embodiments, this can be triggered locally on a part of the network. For example, in can be implemented only in a region of L hops around the path of the user equipment with high mobility or of the moving IAB node with high mobility. On [Fig. 4], the region is represented with a dotted line and L = 2. The triggering for the admission control delegation in the region can be the detection of any of the previous explained triggers or a combination of them: density, backhaul quality and/or expected traffic information.

It is now referred to [Fig. 4]. In the example, the moving IAB node is referenced "IAB-m". It is moving along the path referenced "P". On [Fig. 4], the two images of "IAB-m" are the same object at two successive instants.

During step a, the anchor IAB node is determined.

The backhaul between the IAB nodes of an architecture according to [Fig. 1] and [Fig. 2] is carrying RLC tunnels and an adaptation layer that is intended for one routing between the IAB nodes and the CU of the donor IAB node. The global routing table of the IAB network is stored and managed in the CU of the donor IAB node. The CU of the donor IAB node can collect long term measurements from the MT part of each IAB node and determine the topology of the IAB network. Having the traffic model, the CU determines the most probable communication-path of the UE with high mobility/moving IAB node in the network. This communication-path is determined as a chain of IAB nodes from the donor IAB node IAB-d to the user equipment UE.

The anchor IAB node is determined in function of at least one of the following parameter, or in function of a combination of them:

- the proximity with the displacement path of the moving element (moving IAB node or moving UE);
- the number of hypothetical communication-paths to which the node can belong. An IAB node contributing to a maximum number of possible paths in the network is more relevant as an anchor IAB node. This can reduce the number of changes of the delegation of admission control;
- The number of neighboring IAB nodes in the IAB network. The closeness of the IAB nodes are determined by the means of closeness centrality ranking of each IAB node.

The above parameters can have the form of metrics defining the central character of each IAB node of the network. Then the IAB nodes of the network are ranked one with respect to the other in function of such metrics to elect the best candidate as an anchor IAB node. A person skilled in the art could define the rules to apply to elect the best candidate in function of the context.

The method being dynamic, the best candidates can change for each iteration of the step a, due to the displacement of the moving element(s).

During step b, the delegation from the donor IAB node IAB-d toward a first selected anchor IAB node IAB-a is implemented. This includes a plurality of sub-steps which can be implemented, for example, successively or simultaneously.

In a sub-step i of the step b, context information is transmitted. Context information is a set of parameters defining the network at an instant, including parameters that are necessary for the anchor IAB node to ensure the admission control. For example, the context information includes:

- identifications of available resources at the IAB nodes that are children of the selected anchor IAB nodes,
- the current used PDCP context information ("*Packet Data Convergence Protocol*"), including for example the packets sequence number (SN) transmitted to a given UE connected to a moving IAB node or to the moving IAB node through the backhaul between IAB nodes,
- QoS parameters (for *"Quality of Service"*) for the user terminals UE with high mobility and/or moving IAB nodes, for example the latency, throughput or other parameter describing the quality of the transmission over the backhaul between the IAB-a and their children IAB nodes.

In function of the said context information, the anchor IAB node IAB-a is able to calculate the impact/consequences of the admission of the user terminals UE with high mobility and/or moving IAB node. Then it is able to perform admission control decisions based on the received information. Contrary to the known system, such operations are not made by the donor IAB node IAB-d but is made by the anchor IAB node IAB-a itself.

In an example shown on [Fig. 5], the RRC context (for *"Radio Resource Control"*) is maintained in the CU of the donor IAB node IAB-d.

The example shown on [Fig. 6] is similar to the example of [Fig. 5] with slight differences: the anchor IAB node IAB-a is configured to act as proxy for the children IAB nodes with respect to the CU of the donor IAB node IAB-d. Like in the example of [Fig. 5], the current used PDCP context information is relocated from the CU of the donor IAB node IAB-d to the anchor IAB node IAB-a. The RRC context is maintained in the CU of the donor IAB node IAB-d for the user terminals connected to the donor IAB nodes IAB-d (for access functions). Contrary to the example of [Fig. 5], the RRC context of the backhaul may be relocated to the anchor IAB nodes IAB-a. In other words, the RRC context is split into "RRC access" referenced "RRC1" and preserved in the donor IAB node IAB-d, and "RRC backhaul" referenced "RRC2" and allocated to the anchor IAB node IAB-a.

The example shown on [Fig. 7] is similar to the example of [Fig. 6]. The CU functions of the IAB-d are "virtual functions" that may be allocated on demand into any location of the network. The entire CU functions of the donor IAB node IAB-d is relocated to the anchor IAB node IAB-a in the example of [Fig. 7]. For example, the full RRC context (access and backhaul), the PDCP context and the termination of the fronthaul application protocol (F1-AP) are then performed at the anchor IAB nodes IAB-a and not in the donor IAB node IAB-d.

In sub-steps ii and iii of the step b, signaling of the admission control delegation is implemented. The sub-step ii is about the signaling between the donor IAB node IAB-d and the anchor IAB node IAB-a. The sub-step iii is about the signaling toward the other IAB nodes of the network, especially the outbound IAB nodes IAB-o having the anchor IAB node IAB-a as a parent node.

In embodiments of the sub-step ii, respectively iii, of step b, the signaling between the CU of the donor IAB node IAB-d and the anchor IAB nodes, respectively from the anchor IAB node IAB-a towards the other IAB nodes, F1 application protocol (F1AP) is used. F1AP is a protocol that provides the signaling (transmitting information, i.e. user packets and control information) between the central unit CU of the donor IAB node IAB-d and the other IAB nodes and the user terminals UE of the IAB network. F1AP is defined into 3GPP TS 38.473, "F1 application protocol", rel 15, July 2018.

From the architecture of [Fig. 1] and [Fig. 2] and according to [Fig. 3], it is assumed that in at least some embodiments the interface between two IAB nodes is given by Radio Link Control (RLC) tunnels and adaptation layer that provide the next hop routing information to route data packets between the IAB nodes. The routing information includes, for example, the identification of the next hop target IAB node along the communication-path to the donor IAB node IAB-d.

In some embodiments, the signaling (here with F1-AP) between each anchor IAB nodes IAB-a and the corresponding parent IAB node is at it follows:

1. F1-AP signaling for updating the adaptation layer of the IAB nodes and routing the data packets of the parent IAB nodes to the anchor IAB node. This may be a new signaling or using the DU configuration update message of the rel 15 F1-AP signaling as described in 3GPP TS 38.473, "F1 application protocol", rel 15, July 2018 and including additional messages related to admission control delegation.

2. F1-AP signaling for the filtering of the traffic coming from the user terminal UE with high mobility or from the moving IAB node at the anchor IAB node IAB-a. This F1AP signaling extract the QoS parameters from the received user plane in order to help the call admission control decision in the anchor IAB node. This signaling may be a new signaling or using the UE context setup/modification messages of the rel 15 F1-AP signaling as described in 3GPP TS 38.473, "F1 application protocol", rel 15, July 2018 and including additional messages related to admission control delegation.

3. F1-AP signaling for the reconfiguration of the central unit CU of the donor IAB node IAB-d to the anchor IAB node IAB-a that is located in the IAB network. This relocation signaling is a new F1-AP signaling (not defined in TS 38.873).

Until now, attributions of the admission control from an initial donor IAB node IAB-d have been described. But the method is dynamic. After this first steps, the admission control can be updated: the anchor IAB node IAB-a may be changed. For example, in response to a mobility of a user terminal UE with high mobility or of a moving IAB node, a relocation procedure can be useful.

In sub-step iv of the step c, a reallocating operation, or handover, from a source anchor IAB node IAB-a to a target anchor IAB node IAB-a' is implemented.

The anchor IAB nodes reallocation comprising transfer of the context from a first anchor IAB node IAB-a, called "source" anchor IAB node, to a next anchor IAB node IAB-a', called "target" anchor IAB node, both anchor nodes being under the same CU. This context may be either user plane context, i.e. PDCP context for all the children of the source IAB node and/or the user terminals that are connected to the children of the IAB nodes, or RRC context for all the children of the source IAB node and/or the user terminals that are connected to the children of the IAB nodes. These context information is depending on the data forwarding and control plane options for the anchor IAB nodes. The following options are possible for the context relocation:

- Context information is transmitted from the source anchor IAB node IAB-a to the CU of the donor IAB node IAB-d and the CU forwards it to the target anchor IAB node IAB-a'.
- Context information is transmitted between anchor IAB nodes IAB-a and IAB-a' (without passing through the donor IAB node IAB-d). In such a case, the anchor IAB nodes can communicate with each other, i.e. each anchor IAB node is having dual connectivity with the other IAB node and the CU of the other anchor IAB node. Another option is that the anchor IAB nodes are forming connected dominating set for the IAB network, i.e. every anchor IAB node can communicate with an anchor IAB node in the network and there is at least one anchor IAB that is neighbor of another anchor IAB node.
- Context information is prepared by the CU of the donor IAB node IAB-d for the different anchor IAB nodes and updated locally each time the moving IAB node or the moving user terminal UE is arriving in the location that is managed by a possible anchor IAB node.

In sub-steps v of the step c, a signaling of a handover is implemented.

[Fig. 8] illustrates an embodiment of a handover procedure for moving IAB node. The admission control for the backhaul connection (MT towards the CU) is performed at the CU of the donor IAB node IAB-d. A person skilled in the art would understand that the same can be performed at the CU of an anchor IAB node in a various embodiment.

According to the handover procedure shown on [Fig. 8], one of the limiting factor for the latency is the one way latency from the DU of the source IAB node to the DU of the donor IAB node. This one way latency is equal to the sum of the transmission latencies from the DU of the source IAB node to the DU of the donor IAB node, which can be high in a case of ultra-dense IAB networks. According to the previously presented solutions, it is advantageous to find intermediary IAB nodes that are present on the communication-path towards the CU of the donor IAB node and to delegate the admission control task to such intermediary IAB nodes.

[Fig. 9] illustrates an enhanced handover procedure for moving IAB node with handover preparation signaling from the CU of the donor IAB node IAB-d to the anchor IAB nodes IAB-a. The procedure is performed before the actual handover of the moving IAB node. The embodiment shown on [Fig. 9] considers the case where data forwarding is performed by the anchor IAB node IAB-a, i.e. the PDCP context is relocated from the CU of the previous IAB node to the next anchor IAB node. The RRC context for the user terminals UE of the moving IAB node is maintained in the CU of the donor IAB node IAB-d and the RRC context of the MT part of the moving IAB node is managed by the anchor IAB node. These points are optional features and can be slightly different in other embodiments.

According to EU FP7 INFSO-ICT-247223 ARTIST4G, D3.5c Moving Relays and Mobility aspects, 2012, the transmission latency between two IAB nodes is around 2ms. If the number of hops towards the donor IAB node IAB-d is N and if the latency of the RACH (for "Random Access CHannel") and admission control is around 20ms, we have the following handover latency estimation as:

[Math. 1]

$$\Delta_1 = 47 + 14N(ms)$$

The anchor IAB node is chosen to be close to the moving IAB node so the risk of radio link failure event due to too late admission control is reduced. The advantage of managing the RRC context of the MT part at the anchor IAB node is to allow fast and flexible management of the backhaul of the moving IAB node. By considering the same simulation assumptions as previously and assuming that the number of hops from the source and target IAB node to the anchor IAB node is $N_1$ we will obtain the following handover estimation as:

[Math. 2]

$$\Delta_2 = 47 + 6N(ms) + 8N_1(ms)$$

If we assume that the anchor is reducing the number of hops to $N_1 = N/2$ we can calculate the relative handover latency gain as :

[Math. 3]

$$\delta = \frac{(\Delta_1 - \Delta_2)}{\Delta_1} = \frac{4N}{(47 + 14N)} = \frac{4}{(14 + \frac{47}{N})}$$

If the number of the hops towards the concentrator is assumed to be 6, then the gain from the proposed solution is 18%, the limit of the solution is 4/14 = 29%.
This disclosure is not limited to the methods described here, which are only examples. It encompasses every alternative that a person skilled in the art would envisage when reading this text. The previous examples are made in the context of a 3GPP radio access network (RAN WG3) but are not technically limited to this specific context.

**Acronyms List**

Most of the acronyms used in the present document are well known in the context of the 3GPP technical field. The following list is made only to make easier the reading:

- 3GPP: *"Third Generation Partnership Project"*
- AP: *"Application Protocol"*
- CN: *"Core Network"*
- CU-CP: *"Central Unit Control Plane"*
- CU-UP: *"Central Unit User Plane"*
- DU: *"Distributed Unit"*
- GTP: *"GPRS Tunneling Protocol"*
- IAB: *"Integrated Access and Backhaul"*
- MT: *"Mobile terminal"*
- NAS: *"Non Access Stratum"*
- NG: *"New Generation"*
- NGC: *"Next Generation Core"*
- NR: *"New Radio"*
- OAM: *"Operation And Maintenance"*
- PDCP: *"Packet Data Convergence Protocol"*
- PDU: *"Protocol Data Unit"*
- RACH: *"Random Access Channel"*
- RLC: *"Radio Link Control"*
- RLF: *"Radio Link Failure"*
- RRC: *"Radio Resource Control"*
- UE: *"User Equipment"*

- UDP: *"User Datagram Protocol"*
- Uu: User wireless communication interface with the base station.

**Claims**

1. Method of dynamic attribution of an admission control to an Integrated Access and Backhaul node, IAB, disposed in a tree communication architecture between a fixed donor Integrated Access and Backhaul node, IAB-d, and a mobile terminal, UE said method comprising:

   a. selecting at least one anchor Integrated Access and Backhaul node, IAB-a, among Integrated Access and Backhaul nodes, IAB, of a group in function of the relative position of each node into said architecture, at least one of said nodes of said group and of said terminals being mobile with respect to the others;
   b. signaling delegation of an admission control from a Central Unit, CU, of said donor Integrated Access and Backhaul node, IAB-d, to the selected at least one anchor Integrated Access and Backhaul node, IAB-a, the signaling step including the following sub-steps:

      i. transmitting context information from said Central Unit, CU, of said donor Integrated Access and Backhaul node, IAB-d, to the selected at least one anchor Integrated Access and Backhaul node, IAB-a;
      ii. transmitting identification of said donor Integrated Access and Backhaul node, IAB-d, from said Central Unit, CU, of the said donor Integrated Access and Backhaul node, IAB-d, to the selected at least one anchor Integrated Access and Backhaul node, IAB-a;
      iii. transmitting identification of said anchor Integrated Access and Backhaul node, IAB-a, from said anchor Integrated Access and Backhaul node, IAB-a, to at least one outbound Integrated Access and Backhaul node, IAB-o, said outbound Integrated Access and Backhaul node, IAB-o, having said anchor Integrated Access and Backhaul node, IAB-a, as a parent node.

2. Method according to the preceding claim, wherein the method further comprises, before the selection step a, a triggering step during which a set of at least one predetermined criteria is checked, the following of the method being implemented only if the said set of criteria is verified, the set of criteria including at least one of:

   - an exceeding of a predetermined threshold of a density of the architecture;
   - an exceeding of a predetermined threshold of the traffic of user mobile terminals in the architecture;
   - a drop below a predetermined threshold level of quality in the architecture.

3. Method according to one of the preceding claims, wherein the method further comprises, after the signaling step b, the following step:
   c. reallocating said delegation of the admission control from the Central Unit, CU, of the said donor Integrated Access and Backhaul node (IAB-d) to at least one target anchor Integrated Access and Backhaul node, IAB-a', in response to a relative movement between a source anchor Integrated Access and Backhaul node, IAB-a, and said mobile terminal, UE, the reallocating step including the following sub-steps:

   iv. signaling context information from said source anchor Integrated Access and Backhaul node, IAB-a, to other anchor Integrated Access and Backhaul nodes, IAB, of the group;
   v. signaling any handover between said source anchor Integrated Access and Backhaul node, IAB-a, and any outbound Integrated Access and Backhaul node, IAB-o.

4. Method according to one of the preceding claims, wherein, in the selection step a, the anchor Integrated Access and Backhaul node is determined in function of at least one of the following parameter, or in function of a combination of them:

   - a proximity with a displacement path of a moving element of the architecture;
   - a number of hypothetical communication-paths to which each node can belong;
   - a number of neighboring Integrated Access and Backhaul node nodes of each node in the Integrated Access and Backhaul network.

5. Method according to one of the preceding claims, wherein, the context information of the sub-step ii includes at least one of:

- identifications of available resources at the Integrated Access and Backhaul nodes that are children of the selected anchor Integrated Access and Backhaul nodes in the architecture,
- the current used Packet Data Convergence Protocol,
- at least one Quality of Service parameter.

6. Method according to one of the preceding claims, wherein at least one of the following elements is relocated to the anchor Integrated Access and Backhaul node, IAB-a:

- the current used Packet Data Convergence Protocol context information,
- the Radio Resource Control context of the backhaul, and
- the entire Central Unit functions of the donor Integrated Access and Backhaul node, IAB-d.

7. Method according to one of the preceding claims, wherein the sub-steps ii and iii are made by means of a signaling operation according to the F1 Application Protocol defined in 3GPP TS 38.473, "F1 application protocol", rel 15, July 2018.

8. Computer program comprising instructions to implement the method according to one of claims 1 to 7 when the software is executed by a processor of an Integrated Access and Backhaul, IAB, node.

9. Computer-readable non-transient recording medium on which a computer program is registered to implement a method according to one of claims 1 to 7 when the software is executed by a processor of an Integrated Access and Backhaul node, IAB.

**Patentansprüche**

1. Verfahren eines dynamischen Zuweisens einer Zugangssteuerung zu einem Integrated Access and Backhaul Knoten, IAB, welcher in einer Baum-Kommunikationsarchitektur zwischen einem festen Donor Integrated Access and Backhaul Knoten, IAB-d, und einem mobilen Endgerät, UE, angeordnet ist, wobei das Verfahren umfasst:

a. Auswählen von wenigstens einem Anker Integrated Access and Backhaul Knoten, IAB-a, aus Integrated Access and Backhaul Knoten, IAB, einer Gruppe in Funktion der relativen Position von jedem Knoten in der Architektur, wobei wenigstens einer der Knoten der Gruppe und der Endgeräte bezüglich der anderen beweglich ist;
b. Signalisieren eines Zuweisens einer Zugangssteuerung von einer zentralen Einheit, CU, des Donor Integrated Access and Backhaul Knoten, IAB-d, zu dem ausgewählten wenigstens einen Anker Integrated Access and Backhaul Knoten, IAB-a, wobei der Signalisierungsschritt die folgenden Unter-Schritte umfasst:

i. Übertragen von Kontextinformationen von der zentralen Einheit, CU, des Donor Integrated Access and Backhaul Knoten, IAB-d, zu dem ausgewählten wenigstens einen Anker Integrated Access and Backhaul Knoten, IAB-a;
ii. Übertragen einer Identifikation des Donor Integrated Access and Backhaul Knoten, IAB-d, von der zentralen Einheit, CU, des Donor Integrated Access and Backhaul Knotens, IAB-d, zu dem ausgewählten wenigstens einen Anker Integrated Access and Backhaul Knoten, IAB-a;
iii. Übertragen einer Identifikation des Anker Integrated Access and Backhaul Knoten, IAB-a, von dem Anker Integrated Access and Backhaul Knoten, IAB-a, zu wenigstens einem auslaufenden Integrated Access and Backhaul Knoten, IAB-o, wobei der auslaufende Integrated Access and Backhaul Knoten, IAB-o, den Anker Integrated Access and Backhaul Knoten, IAB-a, als einen Elternknoten aufweist.

2. Verfahren nach dem vorhergehenden Anspruch, wobei das Verfahren ferner vor dem Auswahlschritt a einen Auslöseschritt umfasst, während welchem ein Satz von wenigstens einem vorbestimmten Kriterium überprüft wird, wobei das Folgende des Verfahrens nur implementiert wird, wenn der Satz von Kriterien verifiziert wird, wobei der Satz von Kriterien wenigstens eines umfasst aus:

- ein Übersteigen eines vorbestimmten Schwellenwerts einer Dichte der Architektur;
- ein Übersteigen eines vorbestimmten Schwellenwerts des Traffics der mobilen Benutzer-Endgeräte in der Architektur;
- ein Abfall unter ein vorbestimmtes Schwellenwert-Qualitätsniveau in der Architektur.

3. Verfahren nach einem der vorhergehenden Ansprüche, wobei das Verfahren ferner nach dem Signalisierungsschritt b den folgenden Schritt umfasst:
c. erneutes Zuordnen des Zuweisens der Zugangssteuerung von der zentralen Einheit, CU, des Donor Integrated Access and Backhaul Knoten (IAB-d) zu wenigstens einem Ziel-Anker Integrated Access and Backhaul Knoten, IAB-a', als Reaktion auf eine relative Bewegung zwischen einem Quellen-Anker Integrated Access and Backhaul Knoten, IAB-a, und dem mobilen Endgerät, UE, wobei der Schritt des erneuten Zuordnens die folgenden Unter-Schritte umfasst:

iv. Signalisieren von Kontextinformationen von dem Quellen-Anker Integrated Access and Backhaul Knoten, IAB-a, zu anderen Anker Integrated Access and Backhaul Knoten, IAB, der Gruppe;
v. Signalisieren eines jeglichen Handovers zwischen dem Quellen-Anker Integrated Access and Backhaul Knoten, IAB-a, und jeglichem auslaufenden Integrated Access and Backhaul Knoten, IAB-o.

4. Verfahren nach einem der vorhergehenden Ansprüche, wobei in dem Auswahlschritt a der Anker Integrated Access and Backhaul Knoten in Funktion von wenigstens einem des folgenden Parameters oder in Funktion einer Kombination von ihnen bestimmt wird:

- eine Nähe mit einem Verlagerungspfad eines sich bewegenden Elements der Architektur;
- eine Anzahl von hypothetischen Kommunikationspfaden, zu welchen jeder Knoten gehören kann;
- eine Anzahl von benachbarten Integrated Access and Backhaul Knoten Knoten von jedem Knoten in dem Integrated Access and Backhaul Netzwerk.

5. Verfahren nach einem der vorhergehenden Ansprüche, wobei die Kontextinformationen des Unter-Schritts ii wenigstens eines umfassen aus:

- Identifikationen von verfügbaren Ressourcen bei den Integrated Access and Backhaul Knoten, welche Kinder der ausgewählten Anker Integrated Access and Backhaul Knoten in der Architektur sind,
- das momentan verwendete Packet Data Converge Protokoll,
- wenigstens ein Dienstqualität-Parameter.

6. Verfahren nach einem der vorhergehenden Ansprüche, wobei wenigstens eines der folgenden Elemente dem Anker Integrated Access and Backhaul Knoten, IAB-a, erneut zugewiesen wird:

- die momentan verwendeten Packet Data Converge Protokoll Kontextinformationen,
- der Radio Resource Control Kontext des Backhaul, und
- die gesamten Zentraleinheit-Funktionen des Donor Integrated Access and Backhaul Knoten, IAB-d.

7. Verfahren nach einem der vorhergehenden Ansprüche, wobei die Unter-Schritte ii und iii mittels eines Signalisierungsbetriebs gemäß des F1 Anwendungsprotokolls durchgeführt werden, welches in 3GPP TS 38.473 "F1 Anwendungsprotokoll", rel 15, Juli 2018 definiert ist.

8. Computerprogramm, umfassend Anweisungen zum Implementieren des Verfahrens nach einem der Ansprüche 1 bis 7, wenn die Software von einem Prozessor eines Integrated Access and Backhaul, IAB, Knotens ausgeführt wird.

9. Computer-lesbares nicht-flüchtiges Speichermedium, auf welchem ein Computerprogramm zum Implementieren eines Verfahrens nach einem der Ansprüche 1 bis 7 registriert ist, wenn die Software von einem Prozessor eines Integrated Access and Backhaul Knoten, IAB, ausgeführt wird.

**Revendications**

1. Procédé d'attribution dynamique d'une commande d'admission à un nœud de réseau intégré d'accès et de liaison, IAB, disposé dans une architecture de communication arborescente entre un nœud de réseau intégré d'accès et de liaison donneur, IAB-d, fixe et un terminal mobile, UE, ledit procédé comprenant :

a. la sélection d'au moins un nœud de réseau intégré d'accès et de liaison d'ancrage, IAB-a, parmi des nœuds de réseau intégré d'accès et de liaison, IAB, d'un groupe en fonction de la position relative de chaque nœud dans ladite architecture, au moins l'un desdits nœuds dudit groupe et desdits terminaux étant mobile par rapport aux autres ;

b. la signalisation d'une délégation d'une commande d'admission depuis une unité centrale, CU, dudit nœud de réseau intégré d'accès et de liaison donneur, IAB-d, à l'au moins un nœud de réseau intégré d'accès et de liaison d'ancrage, IAB-a, sélectionné, l'étape de signalisation incluant les sous-étapes suivantes :

i. la transmission d'informations de contexte de ladite unité centrale, CU, dudit nœud de réseau intégré d'accès et de liaison donneur, IAB-d, à l'au moins un nœud de réseau intégré d'accès et de liaison d'ancrage, IAB-a, sélectionné ;

ii. la transmission d'une identification dudit nœud de réseau intégré d'accès et de liaison donneur, IAB-d, depuis ladite unité centrale, CU, dudit nœud de réseau intégré d'accès et de liaison donneur, IAB-d, à l'au moins un nœud de réseau intégré d'accès et de liaison d'ancrage, IAB-a, sélectionné ;

iii. la transmission d'une identification dudit nœud de réseau intégré d'accès et de liaison d'ancrage, IAB-a, dudit nœud de réseau intégré d'accès et de liaison d'ancrage, IAB-a, à au moins un nœud de réseau intégré d'accès et de liaison sortant, IAB-o, ledit nœud de réseau intégré d'accès et de liaison sortant, IAB-o, ayant ledit nœud de réseau intégré d'accès et de liaison d'ancrage, IAB-a, en tant que nœud parent.

2. Procédé selon la revendication précédente, dans lequel le procédé comprend en outre, avant l'étape de sélection a, une étape de déclenchement au cours de laquelle un ensemble d'au moins un critère prédéterminé est contrôlé, la suite du procédé n'étant mise en œuvre que si ledit ensemble de critères est vérifié, l'ensemble de critères incluant au moins l'un parmi :

- un dépassement d'un seuil prédéterminé d'une densité de l'architecture ;
- un dépassement d'un seuil prédéterminé du trafic de terminaux mobiles d'utilisateurs dans l'architecture ;
- une chute au-dessous d'un niveau de seuil prédéterminé de qualité dans l'architecture.

3. Procédé selon l'une des revendications précédentes, dans lequel le procédé comprend en outre, après l'étape de signalisation b, l'étape suivante :

c. la réallocation de ladite délégation de la commande d'admission de l'unité centrale, CU, dudit nœud de réseau intégré d'accès et de liaison donneur, IAB-d, à au moins un nœud de réseau intégré d'accès et de liaison d'ancrage cible, IAB-a', en réponse à un mouvement relatif entre un nœud de réseau intégré d'accès et de liaison d'ancrage source, IAB-a, et ledit terminal mobile, UE, l'étape de réallocation incluant les sous-étapes suivantes :

iv. la signalisation d'informations de contexte dudit nœud de réseau intégré d'accès et de liaison d'ancrage source, IAB-a, à d'autres nœuds de réseau intégré d'accès et de liaison d'ancrage, IAB, du groupe ;

v. la signalisation de tout transfert entre ledit nœud de réseau intégré d'accès et de liaison d'ancrage source, IAB-a, et tout nœud de réseau intégré d'accès et de liaison de réseau intégré sortant, IAB-o.

4. Procédé selon l'une des revendications précédentes, dans lequel, à l'étape de sélection a, le nœud de réseau intégré d'accès et de liaison d'ancrage est déterminé en fonction d'au moins l'un des paramètres suivants ou en fonction d'une combinaison de ceux-ci :

- une proximité d'une voie de déplacement d'un élément mobile de l'architecture ;
- un nombre de voies de communication hypothétiques auxquelles chaque nœud peut appartenir ;
- un nombre de nœuds de réseau intégré d'accès et de liaison voisins de chaque nœud dans le réseau intégré d'accès et de liaison.

5. Procédé selon l'une des revendications précédentes, dans lequel les informations de contexte de la sous-étape ii incluent au moins l'un parmi :

- des identifications de ressources disponibles aux nœuds de réseau intégré d'accès et de liaison qui sont des enfants des nœuds de réseau intégré d'accès et de liaison d'ancrage sélectionnés dans l'architecture,
- le protocole de convergence de données en paquet utilisé courant,
- au moins un paramètre de qualité de service.

6. Procédé selon l'une des revendications précédentes, dans lequel au moins l'un des éléments suivants est relocalisé au nœud de réseau intégré d'accès et de liaison d'ancrage, IAB-a :

- les informations de contexte de protocole de convergence de données en paquet utilisé courant,

- le contexte de commande de ressources radio de la liaison, et
- toutes les fonctions d'unité centrale du nœud de réseau intégré d'accès et de liaison donneur, IAB-d.

7. Procédé selon l'une des revendications précédentes, dans lequel les sous-étapes ii et iii sont réalisées au moyen d'une opération de signalisation selon le protocole d'application F1 défini dans 3GPP TS 38.473, « F1 application protocol », version 15 juillet 2018.

8. Programme d'ordinateur comprenant des instructions pour mettre en œuvre le procédé selon l'une des revendications 1 à 7 lorsque le logiciel est exécuté par un processeur d'un nœud de réseau intégré d'accès et de liaison, IAB.

9. Support d'enregistrement non transitoire lisible par ordinateur sur lequel un programme d'ordinateur est enregistré pour mettre en œuvre un procédé selon l'une des revendications 1 à 7 lorsque le logiciel est exécuté par un processeur d'un nœud de réseau intégré d'accès et de liaison, IAB.

# Fig. 1

# Fig. 2

IAB Node
- DU
- MT

F1*

RLC/Adapt

IAB Node
- DU
- MT

F1*

RLC/Adapt

IAB-d
- DU
- CU

NGC

NR Uu

NR Uu

NR Uu

NG

UE — NR Uu

UE — NR Uu

UE — NR Uu

EP 3 716 681 B1

# Fig. 3

F1-U
- GTP-U
- UDP
- IP
- L1/L2

F1-U*
- GTP-U
- RLC/Adapt
- PHY/MAC

F1-U*
- RLC*/Adapt*
- PHY/MAC

Fig. 4

# Fig. 5

# Fig. 6

# Fig. 7

Fig. 8

Moving IAB node

UE | DU | MT | Source IAB-DU | Target IAB-DU | Anchor IAB node | IAB-CU

Handover preparation/trigger

Downlink user data

Uplink user data

Context Setup Request

Context Setup Response

Latency per hop x lower number of hops

2. Uplink RRC Transfer (Measurement Report)

1. Measurement Report

Admission control

3.MT Context Setup Request

4.MT Context Setup Response

4.a UE Context Setup Response

5. MT Context Modification Request (RRCConnectionReconfiguration)

6. RRCConnectionReconfiguration

Downlink Data Delivery Status

Downlink user data

7. MT Context Modification Response

7a. UE

8. Random Access Procedure

9. RRCConnectionReconfigurationComplete

Downlink user data

10. Uplink RRC Transfer (RRCConnectionReconfigurationComplete)

Uplink user data

11. UE Context Release Command

12. UE Context Release Complete

Fig. 9

EP 3 716 681 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018175817 A


**Non-patent literature cited in the description**

- F1 application protoco. *3GPP TS 38.473,* 15 July 2018
- Study on Integrated access and backhaul. *3GPP TR 38.874,* 15 December 2018
- F1 application protocol. *3GPP TS 38.473,* 15 July 2018